# EUROPÄISCHE PATENTSCHRIFT

(11) **EP 1 179 468 B1**
(45) Veröffentlichungstag und Bekanntmachung des Hinweises auf die Patenterteilung: **25.06.2003**
(21) Anmeldenummer: 01118726.7
(22) Anmeldetag: 06.08.2001
(51) Int. Cl.: B62D 1/04, B62D 1/06

(54) **Lenkrad mit Dekorelement**
Steering wheel comprising a decorative covering element
Volant pourvu d'un élément d'habillage décoratif

(30) Priorität: 09.08.2000 DE 20013705 U
(43) Veröffentlichungstag der Anmeldung: 13.02.2002
(73) Patentinhaber: TRW Automotive Safety Systems GmbH & Co. KG, 63743 Aschaffenburg (DE)
(72) Erfinder: Albayrak, Gökay, 63543 Neuberg (DE); Lehmann, Michael, 63739 Aschaffenburg (DE)
(74) Vertreter: Kitzhofer, Thomas, Dipl.-Ing.

(56) Entgegenhaltungen:
- WO-A-98/33693
- DE-U- 29 910 997

## Beschreibung

Die Erfindung betrifft ein Lenkrad mit einer Nabe, einem Lenkradkranz und wenigstens einer die Nabe und den Lenkradkranz verbindenden Speiche, wobei der Lenkradkranz und/oder die Speiche ein Skelett und eine das Skelett umgebende Umschäumung oder Umspritzung aufweisen bzw. aufweist, mit wenigstens einem Dekorelement und wenigstens einem Klammerelement, an dem das Dekorelement verrastet ist.

Um Lenkrädern ein hochwertiges Aussehen zu verleihen, kann der Lenkradkranz abschnittsweise mit Dekorelementen versehen werden, die eine speziell gestaltete Oberfläche, z.B. Holz, Holzimitat oder Metalloberflächen aufweisen. Es ist wesentlich, daß diese Dekorelemente fest mit dem Lenkrad verbunden sind und sich nicht z.B. durch im Fahrbetrieb auftretende Schwingungen vom Lenkrad lösen.

In der DE 299 100 997 ist eine Möglichkeit dargestellt, ein Dekorelement am Lenkradkranz zu befestigen, wobei ein Klammerelement um das Lenkradskelett ragt und das Klammerelement bis auf an ihm angeordnete Rastelemente umschäumt ist, so daß es im fertigen Lenkrad unterhalb der Umschäumung des Lenkrades liegt. Das Dekorelement ist auf das Rastelement des Klammerelementes aufgeclipst. Der Herstellungsaufwand für diese Art der Befestigung ist durch die Umschäumung des Klammerelements relativ hoch.

Ziel der Erfindung ist es, eine einfache und sichere Befestigung für ein Dekorelement an einem Lenkrad zu schaffen.

Dies wird bei einem Lenkrad der eingangs genannten Art dadurch erreicht, daß das Klammerelement die Umschäumung oder Umspritzung wenigstens teilweise umgreift. Das Klammerelement wird also erst aufgebracht, nachdem die Umschäumung oder Umspritzung des Skeletts erfolgt ist. Auf diese Weise kann auf ein Umschäumen oder Umspritzung des Klammerelementes verzichtet werden. Vorzugsweise bezieht sich die Erfindung auf ein Lenkrad mit einem umschäumten Skelett.

Vorzugsweise weist die Umschäumung oder Umspritzung wenigstens eine Ausnehmung zur Aufnahme des Klammerelementes auf. Die Ausnehmung kann eine Vertiefung in der Oberfläche der Umschäumung oder Umspritzung sein, die auf die geometrischen Abmessungen des Klammerelementes abgestimmt ist. Vorzugsweise ist die Tiefe der Ausnehmung so gewählt, daß die Dicke des Klammerelements der Tiefe der Ausnehmung entspricht und das Klammerelement bündig mit der Umschäumung oder Umspritzung abschließt. Das Spritzgußwerkzeug zur Herstellung der Umschäumung oder Umspritzung muß zur Erzeugung einer solchen Ausnehmung nur geringfügig verändert werden.

Die Ausnehmung kann so gestaltet sein, daß ein Anschlag zur Lagefixierung des Klammerelementes ausgebildet ist.

Bevorzugt weist das Klammerelement ein erstes Rastelement auf und das Dekorelement ein zweites Rastelement, und das erste und das zweite Rastelement gehen eine Rastverbindung miteinander ein. Bekannte Rastverbindungen, z.B. mit Rasthaken, sind geeignet, um das Dekorelement mit dem Klammerelement zu verbinden.

In einer bevorzugten Ausführungsform der Erfindung stützt sich das Klammerelement abschnittsweise direkt am Skelett ab. In diesem Fall kann die Ausnehmung in der Umschäumung oder Umspritzung so tief gestaltet sein, daß in einem Abschnitt des Lenkradkranzes das Skelett freiliegt. Das die Umschäumung oder Umspritzung umgreifende Klammerelement liegt in diesem Abschnitt direkt auf dem Lenkradskelett auf, was die Stabilität der Befestigung erhöht.

In einer bevorzugten Ausführungsform der Erfindung umgibt das Dekorelement den Lenkradkranz im Querschnitt umfangsmäßig wenigstens abschnittsweise, und in einem Abschnitt des Umfangs, der nicht vom Dekorelement umgeben ist, ist der Lenkradkranz von einer Einlage umgeben. Mit einer solchen Einlage, die beispielsweise aus Schaumstoff bestehen kann, läßt sich der Durchmesser des Lenkrades an das Dekorelement anpassen, so daß keine Kanten entstehen, denn Dekorelement und Einlage schließen umfangsmäßig aneinander an.

Vorzugsweise ist der Lenkradkranz wenigstens teilweise von einer Belederung umgeben, und die Ränder der Belederung sind unter dem Dekorelement geklemmt. Auf diese Weise kann auf ein Vernähen oder Verkleben der Belederung im Bereich der Dekorelemente verzichtet werden.

Das Klammerelement ist vorzugsweise auf die Umschäumung oder Umspritzung aufgesteckt. Das Klammerelement weist dazu bevorzugt eine gewisse Eigenelastizität auf, so daß es den Lenkradkranz nach dem Aufstecken fest umgreift.

Im bevorzugten Fall ragt das Klammerelement nicht in die Umschäumung hinein. Das Umgreifen der Umschäumung oder Umspritzung, vor allem in Verbindung mit der Ausnehmung und einer Eigenelastizität des Klammerelementes, hat sich als ausreichend erwiesen, um das Klammerelement und mit diesem das Dekorelement lagesicher am Lenkrad zu fixieren.

Weitere Vorteile und Merkmale der Erfindung ergeben sich aus der nachfolgenden Beschreibung eines Ausführungsbeispiels in Verbindung mit den beigefügten Zeichnungen. In diesen zeigen:

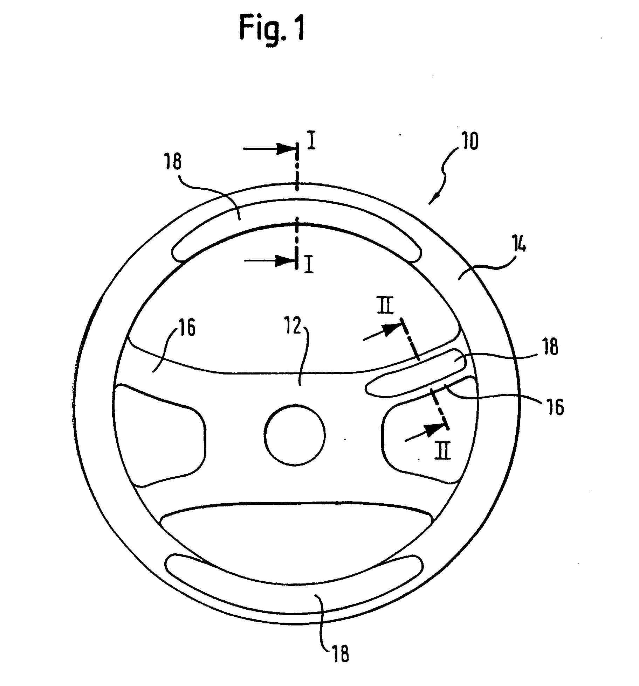

- Figur 1 ein erfindungsgemäßes Lenkrad;
- Figur 2 einen Schnitt durch das Lenkrad aus Figur 1 entlang der Linie I-I oder II-II in Figur 1; und
- Figur 3 ein Detail eines erfindungsgemäßen Lenkrades in einer perspektivischen Explosionsansicht.

Ein erfindungsgemäßes Lenkrad 10, mit einer Nabe 12, einem Lenkradkranz 14 und Speichen 16, ist entlang des Lenkradkranzes 14 und einer Speiche mit Dekorelementen 18 versehen. Diese Dekorelemente 18 weisen eine besonders gestaltete Oberfläche aus z.B. Holz, Holzimitat, Kohlefaser oder Aluminium auf.

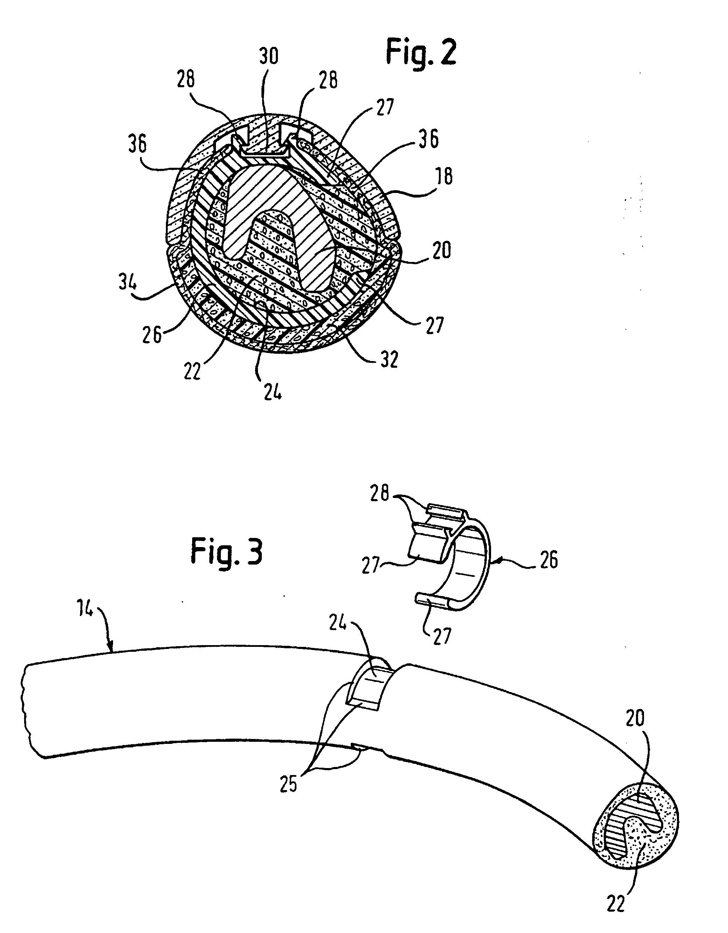

Figur 2 zeigt einen Schnitt durch den Lenkradkranz 14 oder durch die Speiche 16 im Bereich eines Dekorelementes 18.

Der Lenkradkranz 14 und die Speiche 16 enthalten ein Skelett 20, das von einer Umschäumung 22 umgeben ist. Diese Umschäumung 22 besteht z.B. aus PUR-Schaum und wird in einem bekannten Spritzgußprozeß auf das Skelett aufgebracht. Die Umschäumung 22 weist eine Ausnehmung 24 auf (siehe auch Figur 3), in die ein Klammerelement 26 eingesetzt ist. In der Ausnehmung 24 sind seitlich und umfangsmäßig wirkende Anschläge 25 vorgesehen, die zur Lagefixierung des Klammerelementes 26 dienen. Anstatt der Umschäumung 22 kann auch eine Umspritzung mittels eines Thermoplasten vorgesehen sein, z. B. expandierbares PE oder PP.

Das Klammerelement 26 ist C-förmig gestaltet und besitzt eine gewisse Eigenelastizität. Es umgreift die Umschäumung 22 im hier gezeigten Beispiel über etwa 270°. Die freien Enden 27 des Klammerelements 26 liegen dabei an den Anschlägen 25 der Ausnehmung 24 an.

Das Klammerelement 26 weist ein angeformtes Rastelement 28 auf. Radial auswärts dieses Rastelements 28 ist ein Dekorelement 18 angeordnet, das an seiner dem Klammerlement 26 zugewandten Unterseite über ein angeformtes Rastelement 30 verfügt. Die Rastelemente 28, 30 greifen ineinander, um das Dekorelement 18 am Klammerelement 26 zu befestigen.

In einem vom Rastelement 28 radial innen liegenden Bereich ist die Ausnehmung 24 so tief ausgeführt, daß das Klammerelement 26 direkt auf dem Skelett 20 aufliegt und sich an ihm abstützt.

In dem Bereich, in dem der Lenkradkranz nicht von dem Dekorelement 18 umgeben ist, ist die Umschäumung 22 bzw. das Klammerelement 26 von einer Einlage 32 bedeckt. Diese Einlage 32 kann ebenfalls aus einem Schaumstoff bestehen und dazu dienen, den Durchmesser des Lenkradkranzes oder der Speiche so an das Dekorelement 18 anzupassen, daß keine Kante entsteht. Außerdem kann durch die Einlage 32 das Griffgefühl des Lenkrades verbessert werden.

Der Lenkradkranz 14 ist in diesem Beispiel von einer Belederung 34 umgeben, deren Ränder 36 im Bereich des Dekorelementes 18 zwischen diesem und der Umschäumung 22 bzw. dem Klammerelement 26 festgeklemmt sind, um die Belederung zu fixieren.

Die Herstellung des erfindungsgemäßen Lenkrades erfolgt folgendermaßen. Das Lenkradskelett 20 wird umschäumt, wobei die Umschäumung 22 und gleichzeitig die Ausnehmungen 24 gebildet werden. Das Klammerelement 26 wird auf die Umschäumung 22 aufgesteckt, wobei seine freien Enden 27 die Umschäumung 22 umgreifen und in Kontakt mit den Anschlägen 25 kommen. Anschließend wird der Lenkradkranz 14 mit der Einlage 32 umgeben und die Belederung 34 aufgezogen. Abschließend wird das Dekorelement 18 mit seinem Rastelement 30 am Rastelement 28 des Klammerelementes 26 verrastet, wobei die Ränder 36 der Belederung 34 unter dem Dekorelement festgeklemmt werden.

## Patentansprüche

1. Lenkrad mit einer Nabe (12), einem Lenkradkranz (14) und wenigstens einer die Nabe (12) und den Lenkradkranz (14) verbindenden Speiche (16), wobei der Lenkradkranz (14) und/oder die Speiche (16) ein Skelett (20) und eine das Skelett umgebende Umschäumung (22) oder Umspritzung aufweisen bzw. aufweist, mit wenigstens einem Dekorelement (18) und wenigstens einem Klammerelement (26), an dem das Dekorelement (18) verrastet ist, **dadurch gekennzeichnet, daß** das Klammerelement (26) die Umschäumung (22) oder Umspritzung wenigstens teilweise umgreift.

2. Lenkrad nach Anspruch 1, **dadurch gekennzeichnet, daß** die Umschäumung (22) oder Umspritzung wenigstens eine Ausnehmung (24) zur Aufnahme des Klammerelements (26) aufweist.

3. Lenkrad nach einem der Ansprüche 1 und 2, **dadurch gekennzeichnet, daß** das Klammerelement (26) ein erstes Rastelement (28) aufweist, daß das Dekorelement (18) ein zweites Rastelement (30) aufweist und daß das erste und das zweite Rastelement (28, 30) eine Rastverbindung miteinander eingehen.

4. Lenkrad nach einem der vorhergehenden Ansprüche, **dadurch gekennzeichnet, daß** sich das Klammerelement (26) abschnittsweise direkt am Skelett (20) abstützt.

5. Lenkrad nach einem der vorhergehenden Ansprüche, **dadurch gekennzeichnet, daß** das Dekorelement (18) den Lenkradkranz (14) im Querschnitt umfangsmäßig wenigstens abschnittsweise umgibt und daß in einem Abschnitt, der nicht vom Dekorelement (18) umgeben ist, der Lenkradkranz (14) von einer Einlage (32) umgeben ist.

6. Lenkrad nach Anspruch 5, **dadurch gekennzeichnet, daß** die Einlage (32) aus einem Schaumstoff besteht.

7. Lenkrad nach einem der vorhergehenden Ansprüche, **dadurch gekennzeichnet, daß** der Lenkradkranz (14) wenigstens teilweise von einer Belederung (34) umgeben ist und daß Ränder (36) der Belederung (34) unter dem Dekorelement (18) geklemmt sind.

8. Lenkrad nach einem der vorhergehenden Ansprüche, **dadurch gekennzeichnet, daß** das Klammerelement (26) auf die Umschäumung (22) oder Umspritzung aufgesteckt ist.

9. Lenkrad nach einem der vorhergehenden Ansprüche, **dadurch gekennzeichnet, daß** das Klammerelement (26) nicht in die Umschäumung (22) oder Umspritzung hineinragt.

## Claims

1. A steering wheel comprising a hub (12), a steering wheel rim (14) and at least one spoke (16) connecting the hub (12) and the steering wheel rim (14), the steering wheel rim (14) and/or the spoke (16) having a skeleton (20) and a foam casing (22) or injection-molded casing surrounding the skeleton, comprising at least one decorative element (18) and at least one clamp element (26) at which the decorative element (18) is latched, **characterized in that** the clamp element (26) at least partly encompasses the foam casing (22) or injection-molded casing.

2. The steering wheel as claimed in claim 1, **characterized in that** the foam casing (22) or injection-molded casing has at least one recess (24) for accommodating the clamp element (26).

3. The steering wheel as claimed in any of claims 1 and 2, **characterized in that** the clamp element (26) has a first latching element (28), that the decorative element (18) has a second latching element (30), and that the first and the second latching element (28, 30) make a latching connection with each other.

4. The steering wheel as claimed in any of the preceding claims, **characterized in that** portions of the clamp element (26) are directly supported on the skeleton (20).

5. The steering wheel as claimed in any of the preceding claims, **characterized in that** the decorative element (18) peripherally surrounds at least portions of the steering wheel rim (14) as seen in cross-section, and that the steering wheel rim (14) is surrounded by an inlay (32) in a portion which is not surrounded by the decorative element (18).

6. The steering wheel as claimed in claim 5, **characterized in that** the inlay (32) consists of a foamed material.

7. The steering wheel as claimed in any of the preceding claims, **characterized in that** the steering wheel rim (14) is at least partly surrounded by a leather coating (34), and that edges (36) of the leather coating (34) are clamped below the decorative element (18).

8. The steering wheel as claimed in any of the preceding claims, **characterized in that** the clamp element (26) is clipped onto the foam casing (22) or injection-molded casing.

9. The steering wheel as claimed in any of the preceding claims, **characterized in that** the clamp element (26) does not protrude into the foam casing (22) or injection-molded casing.

## Revendications

1. Volant comportant un moyeu (12), une couronne de volant (14) et au moins un rayon (16) reliant le moyeu (12) à la couronne de volant (14), la couronne de volant (14) et/ou le rayon (16) présentant un squelette (20) et un enrobage de mousse (22) ou un enrobage moulé par injection entourant le squelette, comportant au moins un élément décoratif (18) et au moins un élément en agrafe (26) sur lequel est enclenché l'élément décoratif (18), **caractérisé en ce que** l'élément en agrafe (26) enveloppe au moins partiellement l'enrobage de mousse (22) ou l'enrobage moulé par injection.

2. Volant selon la revendication 1, **caractérisé en ce que** l'enrobage de mousse (22) ou l'enrobage moulé par injection présente au moins un évidement (24) pour recevoir l'élément en agrafe (26).

3. Volant selon l'une des revendications 1 et 2, **caractérisé en ce que** l'élément en agrafe (26) présente un premier élément d'enclenchement (28), **en ce que** l'élément décoratif (18) présente un deuxième élément d'enclenchement (30), et **en ce que** les premier et deuxième éléments d'enclenchement (28, 30) s'enclenchent l'un dans l'autre.

4. Volant selon l'une des revendications précédentes, **caractérisé en ce que** l'élément en agrafe (26) prend appui par portions directement sur le squelette (20).

5. Volant selon l'une des revendications précédentes, **caractérisé en ce que** l'élément décoratif (18) entoure sur la périphérie au moins des portions de la couronne de volant (14) en section transversale, et **en ce que** dans une portion qui n'est pas entourée par l'élément décoratif (18), la couronne de volant (14) est entourée par une couche intermédiaire (32).

6. Volant selon la revendication 5, **caractérisé en ce que** la couche intermédiaire (32) est en mousse alvéolaire.

7. Volant selon l'une des revendications précédentes, **caractérisé en ce que** la couronne de volant (14) est entourée au moins partiellement par un revêtement de cuir (34), et **en ce que** les bords (36) du revêtement de cuir (34) sont serrés au-dessous de l'élément décoratif (18).

8. Volant selon l'une des revendications précédentes, **caractérisé en ce que** l'élément en agrafe (26) est fixé sur l'enrobage de mousse (22) ou sur l'enrobage moulé par injection.

9. Volant selon l'une des revendications précédentes, **caractérisé en ce que** l'élément en agrafe (26) ne fait pas saillie dans l'enrobage de mousse (22) ou dans l'enrobage moulé par injection.
